# EUROPÄISCHE PATENTANMELDUNG

(11) **EP 0 965 499 A1**
(43) Veröffentlichungstag der Anmeldung: **22.12.1999**
(21) Anmeldenummer: 99111081.8
(22) Anmeldetag: 17.06.1999
(51) Int. Cl.: B60R 21/26, B60R 21/32

(54) **Verfahren zum Betreiben eines Fahrzeuginsassen-Rückhaltesystems und Vorrichtung zur Durchführung des Verfahrens**

(30) Priorität: 19.06.1998 DE 19827427
(71) Anmelder: TRW Airbag Systems GmbH & Co. KG, 84544 Aschau am Inn (DE)
(72) Erfinder: Angermaier, Lorenz, 85461 Bockhorn (DE)
(74) Vertreter: Kitzhofer, Thomas, Dipl.-Ing.

(57) **Zusammenfassung**

Die Erfindung betrifft ein Verfahren zum Betreiben eines Fahrzeuginsassen-Rückhaltesystems, bei dem nach Zündung der ersten Stufe des Gasgenerators die zweite Stufe, die zur Erzielung der gewünschten Rückhaltewirkung nicht erforderlich ist, dann gezündet wird, wenn durch ihre Zündung keine Rückhaltewirkung auf den Insassen bei einem Unfall mehr erzeugt werden kann. Dadurch wird ausgeschlossen, daß die nicht gezündete Stufe sich unkontrolliert selbst entzünden kann. Darüber hinaus betrifft die Erfindung eine Vorrichtung zur Durchführung des erfindungsgemäßen Verfahrens.

## Beschreibung

Die Erfindung betrifft ein Verfahren zum Betreiben eines Fahrzeuginsassen-Rückhaltesystems, mit einem Gassack, der einen Wirkungsbereich hat, welcher durch seinen im aufgeblasenen Zustand eingenommenen Raum definiert ist, und einem mehrstufigen Gasgenerator, der mehrere einzeln zündbare Treibsätze aufweist.

Darüber hinaus betrifft die Erfindung eine Vorrichtung zur Durchführung des erfindungsgemäßen Verfahrens, die einen Gassack, einen mehrstufigen Gasgenerator, welcher mehrere einzeln zündbare Treibsätze aufweist, und eine Steuerungseinheit umfaßt, welche die Aktivierung der Treibsätze steuert.

Mehrstufengasgeneratoren mit unabhängig voneinander zündbaren Treibsätzen können unterschiedliche Gasmengen, abgestimmt auf Fahrzeuginsassen oder unfallspezifische Parameter, erzeugen. Werden nicht alle Treibsätze zur Erzielung der optimalen Rückhaltewirkung, sondern nur einige gezündet, erwärmt das ausströmende heiße Gas aber zwangsläufig die Außen- und Innenwandungen, so daß Wärme zu dem wenigstens einen nicht gezündeten Treibsatz weitergeleitet wird. Dies kann theoretisch dazu führen, daß sich aufgrund des relativ langsamen Wärmetransports der nicht gezündete Treibsatz nach einigen Minuten selbst entzündet. Dies birgt Gefahren sowohl für den sich noch im Fahrzeug befindlichen Insassen, als auch für Rettungskräfte.

Darüber hinaus stellt ein Gasgenerator, bei dem nicht alle Stufen gezündet sind, ein Recycling-/Entsorgungsproblem dar. Es ist nämlich in der Regel nicht, zumindest nicht einfach von außen feststellbar, ob auch alle Stufen gezündet worden sind, so daß ein Recycling oder eine Entsorgung eines aktivierten Gasgenerators unter erhöhtem Sicherheitsaufwand erfolgen muß.

Die Erfindung schafft ein Verfahren, bei dem die obengenannten Gefahren und Probleme weitgehend ausgeschlossen werden können. Dies wird erfindungsgemäß dadurch erreicht, daß bei einem Unfall, bei dem zur Erreichung einer gewünschten Rückhaltewirkung nicht alle Stufen gezündet werden müssen, die nicht gezündete Stufe/Stufen zu einem solchen Zeitpunkt gezündet wird/werden, wenn sie im wesentlichen keine Rückhaltewirkung auf den Insassen erzeugen kann/können. Die Erfindung sieht dementsprechend vor, daß auf jeden Fall die noch nicht gezündeten Stufen aktiviert werden, so daß stets alle Treibsätze oder Stufen gezündet werden, selbst wenn zur Erzielung der Rückhaltewirkung nicht alle Stufen gezündet werden sollen. Die Zündung der nicht aktivierten Stufen erfolgt jedoch dann, wenn diese keine Gefahr mehr für den Insassen darstellen können, d.h. wenn keine oder im wesentlichen keine Rückhaltewirkung mehr durch sie erzielt werden kann.

Vorzugsweise erfolgt die Aktivierung der nicht gezündeten Stufen dann, wenn sich der Insasse außerhalb oder im wesentlichen außerhalb, also am Rand des Wirkungsbereichs des Gassacks befindet. Da sehr kleine Insassen jedoch unter Umständen sehr nahe am Rückhaltesystem sitzen, kann es theoretisch vorkommen, daß z.B. ein Fahrer-Gassack selbst dann den Insassen im aufgeblasenen Zustand berührt, wenn dieser sich vollständig zurückgelehnt hat. In dieser Position des Insassen kann durch den Gassack noch eine Rückhaltewirkung ausgeübt werden, die aber nicht so groß ist wie bei einem Insassen mit nach vorn verlagertem Oberkörper. Aus diesem Grunde wurde zuvor definiert, daß die Aktivierung der noch nicht gezündeten Stufen dann erfolgen soll, wenn im wesentlichen keine Rückhaltewirkung mehr auf den Insassen ausgeübt werden kann. Es ist folglich möglich, ein Gefährdungspotential vorzugeben (z.B. einen Minimalabstand vom Lenkrad oder einen Zeitpunkt, in dem sich der Insasse in einer Rückwärtsbewegung befindet), das unterschritten werden muß, woraufhin die noch nicht aktivierten Stufen gezündet werden. Vorzugsweise jedoch soll das Fahrzeuginsassenrückhaltesystem so ausgebildet sein und das Verfahren so betrieben werden, daß bei Zündung der noch nicht aktivierten Stufen überhaupt keine Rückhaltewirkung auf den Insassen ausgeübt werden kann.

Gemäß einer bevorzugten Ausführungsform ist vorgesehen, daß die Zündung der nicht gezündeten Stufe/Stufen dann erfolgt, wenn sich der Insasse nach dem Eintauchen in den Gassack in einer Rückwärtsbewegung, auch Rebound genannt, befindet. Die Aktivierung der nicht gezündeten Stufe/Stufen kann nach einer vorbestimmten Zeit, z.B. zwischen 80 und 150 ms, nach Zündung der zur Erzielung der Rückhaltewirkung erforderlichen Stufe oder Stufen erfolgen. In diesem Zeitbereich erfolgt etwa die Rückwärtsverlagerung des Insassen. Auch hier wirkt der durch die sehr spät gezündeten Stufen aufgeblasene Gassack nicht als Rückhaltemittel mehr, denn der Insasse bewegt sich ja nicht nach vorn, sondern zurück.

Darüber hinaus kann die Aktivierung der noch nicht gezündeten Stufen aber auch abhängig von der tatsächlichen, nicht nur der angenommenen Position des Insassen erfolgen. Dies wird durch wenigstens einen Sensor erreicht. Dieser erfaßt, wann sich der Insasse nach dem Eintauchen in den Gassack wieder außerhalb oder fast außerhalb des Wirkungsbereichs des Gassacks befindet. Eine Steuerungseinheit, die mit dem Sensor verbunden ist, aktiviert auf ein entsprechendes Signal des Sensors hin die nicht gezündete Stufe oder Stufen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 einen Längsschnitt durch einen Zweistufengasgenerator, der beim erfindungsgemäßen Verfahren verwendet werden kann und einen Teil der in Figur 2 gezeigten Ausführungsform der erfindungsgemäßen Vorrichtung bildet, und
Figur 2 eine schematische Seitenansicht eines Beifahrers und der erfindungsgemäßen Vorrichtung mit voll entfaltetem Beifahrer-Gassack.

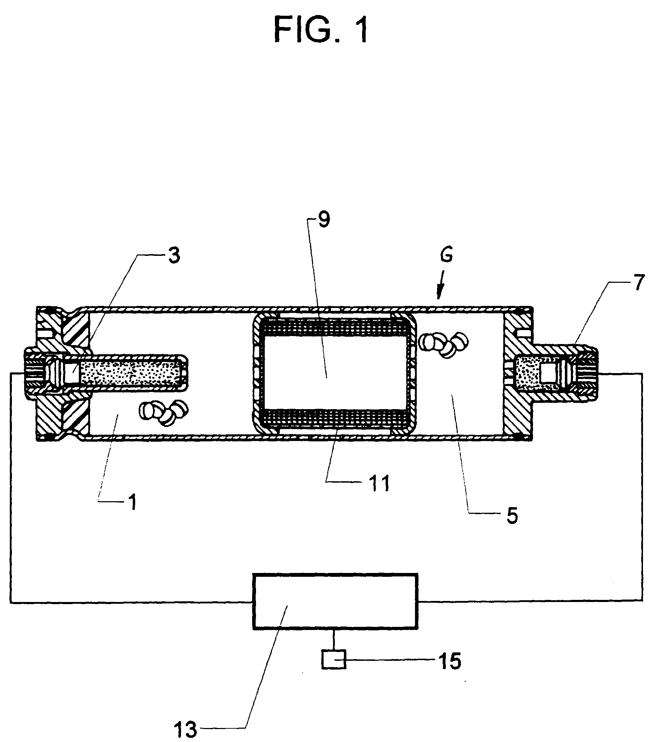

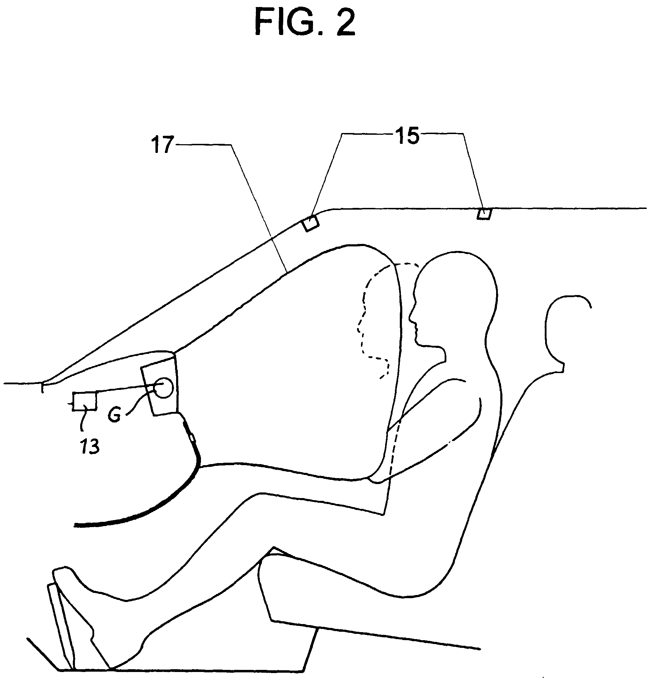

In Figur 1 ist ein Zweistufen-Gasgenerator G gezeigt, wobei die erste Stufe durch einen pyrotechnischen Treibsatz 1 in einer linken Kammer und einen zugeordneten Zünder 3 und die zweite Stufe durch einen pyrotechnischen Treibsatz 5 in einer rechten Kammer samt einem zugehörigen Zünder 7 definiert ist. Bei Zündung jeder Stufe strömt das erzeugte Gas in eine Kammer 9 und von dort durch ein Filter 11 in einen in Figur 2 gezeigten Beifahrer-Gassack 17. Die Zünder 3, 7 stehen mit einer Steuerungseinheit 13 in Verbindung. Diese aktiviert im Rückhaltefall eine oder beide Treibsätze 1, 5. Die Steuerungseinheit 13 ist mit mehreren, in Figur 2 näher gezeigten Sensoren 15 verbunden, die die Lage des Oberkörpers des Insassen erfassen.

Je nach Unfallschwere und der Position und Konstitution (Gewicht, Größe) des Insassen werden bei einem Unfall der Treibsatz 1, der Treibsatz 5 oder beide Treibsätze 1 und 5 gezündet. Der in Figur 2 gezeigte Gassack 17 wird durch das erzeugte Gas entfaltet und mehr oder weniger hart aufgeblasen. Der Gassack 17 hat einen Wirkungsbereich, der durch seinen im aufgeblasenen Zustand eingenommenen, in Figur 2 gezeigten Raum (begrenzt durch die Wand des Gassacks) definiert ist.

Sind die obengenannten Parameter so, daß nur eine Stufe, z.B. der Treibsatz 1 zur Erreichung einer optimierten, angepaßten Rückhaltewirkung gezündet wird, nimmt der Gassack 17 die in Figur 2 gezeigte Gestalt an. Die Verlagerung des Oberkörpers des Insassen nach vorn wird durch den aufgeblasenen Gassack 17 begrenzt. Der Insasse taucht in den Gassack 17 ein. Anschließend verlagern sich Oberkörper und Kopf wieder nach hinten, um sich anschließend, abhängig vom Unfall (Unfallschwere, Zweitaufprall), wieder nach vorn zu verlagern.

Damit verhindert wird, daß sich durch die mit der Gaserzeugung nach Zündung des Treibsatzes 1 erfolgte Wärmeausbreitung der Treibsatz 5 selbst entzündet und der Insasse, der sich gegebenenfalls gerade aus dem Auto befreien will, durch den dann erneut aufgeblasenen Gassack 17 verletzt wird, wird der Treibsatz 5 gezielt dann aktiviert, wenn keine Rückhaltewirkung auf den Insassen durch Zündung dieser Stufe erzeugt werden kann. Damit die obengenannte Gefahr der Verletzung des Insassen ausgeschlossen werden kann, wird die zweite Stufe so schnell wie möglich gezündet, nämlich sofort dann, wenn sich der Insasse wieder außerhalb des Wirkungsbereichs des Gassacks 17 in der ersten Rückwärtsbewegung nach Eintauchen in den Gassack 17 befindet. Mehrere im Fahrzeug angeordnete Sensoren 15 erfassen die Lage des Kopfes und des Oberkörpers des Insassen während des Unfalls. Die Steuerungseinheit 13 aktiviert die zweite Stufe, sobald der Insasse außerhalb des Wirkungsbereichs des Gassacks 17 ist.

Gemäß einer einfacheren Lösung können die Sensoren 15 auch weggelassen werden. Die erfindungsgemäße Vorrichtung sieht dann identisch zur Vorrichtung nach Figur 2 aus, wobei nur die Sensoren 15 weggelassen sind. Dann wird nach einem vorher, abhängig von dem Fahrzeuginsassen-Rückhaltesystem (Gassack, z.B. Volumen; Gasgenerator, z.B. Gasausbreitungsgeschwindigkeit, Gasvolumen; Steuerungseinheit, z.B. Ansprechzeit) festgelegten Zeitabstand nach Aktivierung der ersten Stufe die zweite Stufe gezündet. Der Zeitabstand beträgt vorzugsweise etwa 100 ms. Man kann mit ausreichender Sicherheit sagen, daß sich der Insasse zu diesem Zeitpunkt bereits am Ende seiner Rückverlagerung befindet. Selbst wenn er sich noch etwas im Wirkungsbereich des Gassacks 17 befinden sollte, wie durch den mit unterbrochenen Linien dargestellten Kopf gezeigt, ist die Wucht des auf ihn treffenden Gassacks, der wieder zu voller Größe aufgeblasen wird, gering, denn erstens bewegen sich Gassack und Insasse in die gleiche Richtung und zweitens nimmt die Entfaltungsgeschwindigkeit des Gassacks am Ende des Entfaltungsvorgangs deutlich ab. Der Kopf befindet sich also hier im wesentlichen bereits außerhalb des Wirkungsbereichs des Gassacks.

## Patentansprüche

1. Verfahren zum Betreiben eines Fahrzeuginsassen-Rückhaltesystems, mit
einem Gassack (17), der einen Wirkungsbereich hat, welcher durch seinen im aufgeblasenen Zustand eingenommenen Raum definiert ist, und
einem mehrstufigen Gasgenerator, der mehrere einzeln zündbare Treibsätze (1, 5) aufweist,
dadurch gekennzeichnet, daß bei einem Unfall. bei dem zur Erreichung einer gewünschten Rückhaltewirkung nicht alle Stufen gezündet werden, die nicht gezündete Stufe oder Stufen zu einem solchen Zeitpunkt gezündet wird/werden, wenn sie im wesentlichen keine Rückhaltewirkung auf den Insassen mehr erzeugen kann/können.

2. Verfahren nach Anspruch 1, dadurch gekennzeichnet, daß die Zündung der nicht gezündeten Stufe/Stufen dann erfolgt, wenn sich der Insasse außerhalb des Wirkungsbereichs des Gassacks (17) befindet.

3. Verfahren nach Anspruch 1 oder 2, dadurch gekennzeichnet, daß die Zündung der nicht gezündeten Stufe/Stufen dann erfolgt, wenn sich der Insasse nach dem Eintauchen in den Gassack (17) in einer Rückwärtsbewegung befindet.

4. Verfahren nach einem der vorstehenden Ansprüche, dadurch gekennzeichnet, daß die Zündung der nicht gezündeten Stufe/Stufen nach einer vorbestimmten Zeit nach Zündung der zur Erzielung der Rückhaltewirkung erforderlichen Stufe/Stufen erfolgt.

5. Verfahren nach einem der vorstehenden Ansprüche, dadurch gekennzeichnet, daß die Zündung der nicht gezündeten Stufe/Stufen zwischen 80 und 150 ms nach Zündung der zur Erzielung der Rückhaltewirkung erforderlichen Stufe/Stufen erfolgt.

6. Verfahren nach einem der Ansprüche 1 bis 3, dadurch gekennzeichnet, daß über wenigstens einen Sensor (15) erfaßt wird, wann sich der Insasse nach dem Eintauchen in den Gassack (17) im wesentlichen wieder außerhalb des Wirkungsbereichs des Gassacks (17) befindet und
daß eine Steuerungseinheit (13) vorgesehen ist, die auf ein entsprechendes Signal des Sensors (15) die nicht gezündete Stufe/Stufen aktiviert.

7. Vorrichtung zur Durchführung des Verfahrens nach einem der vorstehenden Ansprüche, mit
einem Gassack (17),
einem mehrstufigen Gasgenerator, der mehrere einzeln zündbare Treibsätze (1, 5) aufweist, und
einer Steuerungseinheit (11), welche die Aktivierung der Treibsätze (1, 5) steuert.

8. Vorrichtung nach Anspruch 7, gekennzeichnet durch wenigstens einen mit der Steuerungseinheit (13) verbundenen Sensor (15), der die Lage des Insassen nach Aktivierung der zur Erzielung der Rückhaltewirkung erforderlichen Stufe/Stufen erfaßt.

9. Vorrichtung nach Anspruch 7, gekennzeichnet durch mehrere im Fahrzeuginnenraum vorgesehene Sensoren, die die Lage des Oberkörpers des Insassen erfassen.
